# EUROPÄISCHE PATENTSCHRIFT

(11) **EP 3 693 520 B1**
(45) Veröffentlichungstag und Bekanntmachung des Hinweises auf die Patenterteilung: **18.08.2021**
(21) Anmeldenummer: 20151215.9
(22) Anmeldetag: 10.01.2020
(51) Int. Cl.: E04F 19/08, A01K 31/14

(54) **NIST- UND/ODER ANSIEDLUNGSKASTEN FÜR FLUGTIERE**
NESTING AND/OR SETTLEMENT BOX FOR FLYING ANIMALS
BOITE DE NICHAGE ET/OU D'IMPLANTATION POUR ANIMAUX VOLANTS

(30) Priorität: 21.01.2019 DE 102019000347
(43) Veröffentlichungstag der Anmeldung: 12.08.2020
(73) Patentinhaber: Gießler, Dirk, 79356 Eichstetten Baden-Württemberg (DE)
(72) Erfinder: Gießler, Dirk, 79356 Eichstetten Baden-Württemberg (DE)
(74) Vertreter: Huwer, Andreas

(56) Entgegenhaltungen:
- EP-A1- 2 745 688
- EP-A1- 3 222 786
- DE-B3-102015 212 422
- GB-A- 2 353 050

## Beschreibung

Die Erfindung betrifft einen Nist- und/oder Ansiedlungskasten für Flugtiere, wie Mauersegler oder Fledermäuse, wobei der Nist- und/oder Ansiedlungskasten in eine Wärmedämmverbundschicht eines Gebäudes integrierbar ist und ein Kastenteil mit Wänden aufweist, die mindestens eine Innenhöhle begrenzen, und wobei die vordere Wand des Kastenteils von wenigstens einem Flugloch durchsetzt ist, das einen Zugang zur Innenhöhle bildet.

Ein derartiger Nistkasten für Mauersegler wird von der Firma Schwegler Vogel- & Naturschutzprodukte GmbH in 73614 Schorndorf, DE unter der Bezeichnung "Mauersegler WDV-Einbaukasten Typ 1A" im Internet angeboten. Der Nistkasten hat ein etwas quaderförmiges Kastenteil aus Holzbeton, das eine vordere Wand, eine linke Wand, eine rechte Wand, eine obere Wand, eine unter Wand und eine Rückwand aufweist, die eine Innenhöhlung umgrenzen. Die vordere Wand des Kastenteils ist von einem Flugloch durchsetzt, das einen Zugang zur Innenhöhle bildet. Die vordere Wand hat an ihrer der Innenhöhlung abgewandten Vorderseite einen ringförmigen, nach außen vorstehenden Vorsprung, der die Fluglochs umgrenzt. Gegenüber der an den Vorsprung angrenzenden Bereiche der Vorderseitenfläche der vorderen Wand steht der Vorsprung um ein vorbestimmtes Maß über, das der Dicke einer Putzschicht entspricht, mit der die WDVS-Dämmplatten der Wärmedämmverbundschicht nach ihrer Montage an der Gebäudefassade überputzt werden.

Bei der Montage werden zunächst die WDVS-Dämmplatten und der Nistkasten an der an der Gebäudefassade positioniert, wobei die WDVS-Dämmplatten in an sich bekannter Weise mit WDVS-Dübeln an der Gebäudefassade befestigt und zusätzlich miteinander und/oder mit der Gebäudewand verklebt werden. Der Nistkasten wird so an den dazu benachbarten WDVS-Dämmplatten angeordnet, dass die den Vorsprung umgrenzende Vorderseitenfläche der vorderen Wand mit den der Gebäudefassade abgewandten Außenflächen der benachbarten WDVS-Dämmplatten in gerader Linie fluchtet. Dabei kommt die Rückwand des Nistkastens an der Gebäudefassade zur Anlage. Der das Flugloch umgrenzende Vorsprung steht etwas über die der Gebäudewand abgewandten Außenflächen der WDVS-Dämmplatten über.
Danach wird eine Putzschicht aufgebracht, die sich durchgängig über die WDVS-Dämmplatten und die vordere Wand des Nistkastens erstreckt. In Putzschicht wird als Armierung ein Einputz-Gewebe eingespachtelt. Im Bereich des Fluglochs und des vorstehenden Vorsprung wird vom Monteur eine Aussparung in das Einputz-Gewebe eingebracht. Die Dicke der Putzschicht wird so gewählt, dass diese bündig an die am weitesten vorstehende Stelle des ringförmigen Vorsprungs anschließt.

Der Einbau des Nistkastens in die WDVS-Schicht ist also mit einem gewissen Arbeitsaufwand verbunden. Ungünstig ist außerdem, dass die Fassade an der Stelle, an der der Nistkasten angeordnet ist, nicht oder nur schlecht wärmegedämmt ist.

Weitere Nistkästen sind aus DE 10 2015 212422 B3, EP 2 745 688 A1 sowie GB 2 353 050 A bekannt.

Ausgehend von diesem Stand der Technik stellt sich für den Fachmann die Aufgabe, einen Nist- und/oder Ansiedlungskasten der eingangs genannten Art zu schaffen, der einfach und schnell in eine WDVS-Wand eingebaut werden kann. Diese Aufgabe wird mit den Merkmalen des Anspruchs 1 gelöst. Diese sehen bei einem Nist- und/oder Ansiedlungskasten der eingangs genannten Art vor, dass mit der vorderen Wand des Kastenteils ein Einputz-Gewebe verbunden ist, welches die der Innenhöhle abgewandte Vorderseitenfläche der vorderen Wand zumindest bereichsweise überdeckt und zum Einputzen in eine Putzschicht auf zu dem Kastenteil benachbarten Wärmedämmelementen der Wärmedämmverbundschicht seitlich über den Außenrand der Vorderseitenfläche der vorderen Wand des Kastenteils übersteht.

In vorteilhafter Weise kann dadurch nach dem Einbau des Nist- und/oder Ansiedlungskasten in eine aus WDVS-Dämmplatten bestehende Dammstoffschicht diese gleich verputzt werden. Dabei erstreckt sich das mit der vorderen Wand des Kastenteils verbundene Einputz-Gewebe bis über die benachbarten WDVS-Dämmplatten. Das Einputz-Gewebe, das an der vorderen Wand des Kastenteils fixiert ist, steht bevorzugt um mindestens 10 cm über die Außenkontur des Kastenteils über. Das Einputz-Gewebe für die benachbarten WDVS-Dämmplatten wird bevorzugt derart an den WDVS-Platten angebracht, dass es das Einputz-Gewebe, das an der vorderen Wand des Kastenteils fixiert ist, überdeckt. Hierdurch können Zugspannungen, die in der Wärmedämmverbundschicht beispielsweise beim Auftreten von Windlasten entstehen können, über die Einputzgewebe hinweg abgestützt werden. Da das Einputzgewebe bereits fertig vormontiert an dem Kastenteil angebracht ist, braucht der Monteuer dieses bei der Montage weder mit dem Kastenteil zu verbinden noch eine Öffnung in das Einputzgewebe zu scheiden. Hierdurch vereinfacht sich die Montage entsprechend.

Der erfindungsgemäße Nist- und/oder Ansiedlungskasten kann insbesondere unterhalb eines Dachvorsprungs eines Hauses in eine Wärmedämmverbundschicht eingebaut werden und für Mauersegler vorgesehen sein. Es ist aber auch denkbar, dass die Innenhöhle so dimensioniert sind, dass sie als Brutraum für andere Vögel als Mauersegler geeignet ist.

Bei einer vorteilhaften Ausführungsform der Erfindung ist an der vorderen Wand des Kastenteils mindestens ein das wenigstens eine Flugloch ringförmig umgrenzender Vorsprung vorgesehen, der über die daran angrenzende, der Innenhöhle abgewandte Vorderseitenfläche der vorderen Wand vorsteht, wobei das Einputz-Gewebe den ringförmigen Vorsprung umgrenzt. Das Überstandsmaß, um das der Vorsprung über die dazu benachbarte Vorderseitenfläche der vorderen Wand des Kastenteils übersteht, entspricht bevorzugt der Dicke der Putzschicht, mit welcher der den Vorsprung umgrenzende Teilbereich der vorderen Wand des Kastenteils und die an das Kastenteil angrenzenden WDVS-Dämmstoffplatten verputzt werden. Der Vorsprung selbst wird also nicht verputzt und schließt dennoch im Einbauzustand des Nist- und/oder Ansiedlungskastens flächenbündig und stufenlos an die den Vorsprung umgrenzende Putzschicht an.

Bei einer Weiterbildung der Erfindung weist der ringförmige Vorsprung an seinem dem Flugloch abgewandten Außenrand eine umlaufende Ringnut auf und das Einputz-Gewebe greift mit einem Randbereich formschlüssig in die Ringnut ein. Hierdurch kann das Einputz-Gewebe bei der Herstellung des Nist- und/oder Ansiedlungskasten auf einfache Weise an dem Kastenteil fixiert werden. Die Ringnut verläuft bevorzugt entlang einer Kreislinie, welche insbesondere konzentrisch zu dem Flugloch angeordnet sein kann.

Bei einer bevorzugten Ausgestaltung der Erfindung weist das Einputz-Gewebe an der Stelle, an welcher der ringförmige Vorsprung angeordnet ist, eine vom Außenrand des Einputz-Gewebes beabstandete Lochung auf, deren lichte Querschnittsabmessungen kleiner sind als die entsprechenden Außenquerschnittsabmessungen des ringförmigen Vorsprungs, wobei das Einputz-Gewebe aus einem elastischen Material besteht. Bei der Herstellung des Nist- und/oder Ansiedlungskasten kann dann das Einputz-Gewebe in eine Vormontagestellung relativ zu der vorderen Wand positioniert werden, in der die Lochung dem Vorsprung gegenüberliegt. Die Elasitizität des Materials ist so gewählt, dass es entgegen seiner Rückstellkraft derart aufweitbar ist, dass der die Lochung umgrenzende Rand des Einputz-Gewebes auf den Vorsprung bis die Ringnut aufziehbar und ggf. auch wieder von dieser abziehbar ist. Bei Bedarf kann das Einputzgewebe zusätzlich mit Hilfe von Klebstoff in der Ringnut fixiert werden. Der Vorsprung kann einstückig mit der vorderen Wand ausgestaltet sein. Dies ermöglicht eine kostengünstige Herstellung der vorderen Wand. Diese kann gegebenenfalls mit mindestens einer weiteren Wand des Kastenteils einstückig verbunden sein.

In der Aufsicht auf die Vorderseitenfläche der vorderen Wand steht das Einputz-Gewebe bevorzugt allseitig über die Außenkontur des Kastenteils über. Somit kann beim Einbau des Nist- und/oder Ansiedlungskasten auf einfache Weise nach allen Seiten eine Überdeckung des Einputz-Gewebe mit den Einputz-Geweben erreicht werden, welche die den Nist- und/oder Ansiedlungskasten angrenzenden Wärmedämmplatten abdecken.

Vorteilhaft ist, wenn das Kastenteil eine der vorderen Wand gegenüberliegende Rückwand aufweist, wenn die Innenhöhle zwischen der vorderen Wand und der Rückwand angeordnet ist, und wenn die Rückwand eine höhere Wärmedämmung aufweist als die vordere Wand. Hierdurch ist im eingebauten Zustand des Nist- und/oder Ansiedlungskasten der hinter der Rückwand liegende Bereich der Gebäudeaußenwand besser wärmegedämmt.

Die höhere Wärmedämmung der Rückwand kann dadurch erreicht werden, dass diese eine größere Materialstärke aufweist als die vordere Wand.

Es ist aber auch denkbar, dass die Rückwand mindestens zwei Schichten aufweist, dass eine erste Schicht an die Innenhöhle angrenzt und eine zweite Schicht zwischen der ersten Schicht und der der vorderen Wand des Nist- und/oder Ansiedlungskastens abgewandten Rückseitenfläche des Kastenteils angeordnet ist, und dass die zweite Schicht aus einem Material besteht, das eine höhere Wärmedämmung aufweist als die erste Schicht. Hierdurch kann die Innenhöhle nach allen Seiten von einem Material begrenzt werden, das für einen Kontakt mit dem den Nist- und/oder Ansiedlungskasten bewohnenden Flugtier gut geeignet ist. Dennoch wird durch die zusätzliche zweite Schicht eine gute Wärmedämmung an der Rückwand ermöglicht. Die zweite Schicht kann insbesondere aus Mineralwolle, einem Aerogel und/oder Polyurethan bestehen. Auch andere Dämmstoffe sind denkbar. Die Wandstärke der zweiten Schicht kann zwischen 10 mm und 50 mm betragen.

Bei einer vorteilhaften Ausgestaltung der Erfindung, die als Ansiedlungskasten für eine Fledermaus dient, ist die Innenhöhle von einer einen Überhang bildenden Schräge überdeckt, die eine Oberflächenstruktur aufweist, die als Aufhängestelle für eine Fledermaus geeignet ist. Die Schräge kann beispielsweise eine Vielzahl von parallel übereinander angeordneten Profilierungsvorsprüngen aufweisen, an denen sich Fledermäuse festhalten können.

Erwähnt werden soll noch, dass das Kastenteil eine linke, eine rechte, eine obere und eine untere Wand aufweisen kann, und dass die linke Wand parallel zur rechten Wand und die obere Wand parallel zur unteren Wand und rechtwinklig zur linken und rechten Wand angeordnet sein kann. Die vordere Wand ist bevorzugt parallel zur Rückwand angeordnet. Das Kastenteil kann somit im Wesentlichen quaderförmig ausgestaltet sein.

Ein ähnlicher Kasten, der ein Kastenteil mit einer Innenhöhle und einer vorderen Wand bzw. einer Vorderseitenfläche mit einer Öffnung hat, die einen Zugang zur Innenhöhle bildet, wobei an der vorderen Wand bzw. der Vorderseitenfläche ein Einputz-Gewebe oder dergleichen Gewebeanschluss mit dem Kastenteil verbunden ist, welches zum Einputzen seitlich über den Außenrand der Vorderseitenfläche übersteht, kann auch für die Integration mindestens eines Briefkastens oder einer Klingelanlage (z.B. Klingelbrett) im WDVS eingesetzt werden. Dabei dient die Innenhöhle zur Aufnahme zumindest eines Abschnitts des Briefkastens bzw. der Klingelanlage. Das Kastenteil kann aus nichtbrennbaren oder zumindest schwer entflammbaren Elementen, wie Platten hergestellt sein, solche Platten aufweisen oder aus einem nichtbrennbaren oder zumindest schwer entflammbaren Material bestehen.

Nachfolgend sind Ausführungsbeispiele der Erfindung näher erläutert. Es zeigen:

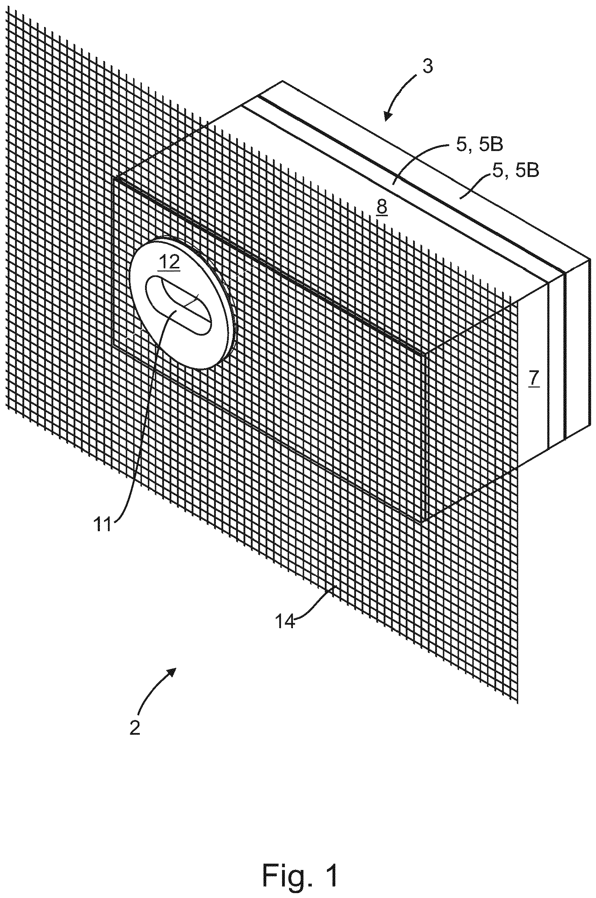

- Fig. 1: einen Nist- und/oder Ansiedlungskasten für Vögel, mit einem eine Innenhöhle aufweisenden Kastenteil, das in seiner vorderen Wand ein Flugloch hat, welches einen Zugang zur Innenhöhle bildet,
- Fig. 2: einen Querschnitt durch den Nist- und/oder Ansiedlungskasten, wobei die Querschnittsebene vertikal durch das Flugloch verläuft,
- Fig. 3: eine dreidimensionale Ansicht des in eine Wärmedämmverbundschicht eingebauten Nist- und/oder Ansiedlungskasten, wobei Dämmplatten der Wärmedämmverbundschicht teilweise transparent und eine Putzschicht der Wärmedämmverbundschicht nur teilweise dargestellt ist, um den inneren Aufbau der Wärmedämmverbundschicht zu verdeutlichen,
- Fig. 4: einen vergrößerten Ausschnitt durch das Kastenteil des Nist- und/oder Ansiedlungskastens gemäß Fig. 2, wobei der Ausschnitt einen Teilquerschnitt durch einen das Flugloch ringförmig umgrenzenden Vorsprung an der vorderen Wand des Kastenteils zeigt,
- Fig. 5: ein Ausführungsbeispiel eines Nist- und/oder Ansiedlungskasten für Vögel, der mehrere in einer horizontalen Reihe nebeneinander angeordnete Innenhöhlen aufweist, die jeweils durch ein ihnen zugeordnetes Flugloch zugänglich sind,
- Fig. 6: einen Nist- und/oder Ansiedlungskasten für Fledermäuse,
- Fig. 7: das Kastenteil des in Fig. 6 dargestellten Nist- und/oder Ansiedlungskasten, wobei die vordere Wand des Kastenteils demontiert ist, um die Sicht auf die dahinter liegende Innenhöhle freizugeben.

Ein in eine Wärmedämmverbundschicht 1 eines in der Zeichnung nicht näher dargestellten Gebäudes integrierbarer Nist- und/oder Ansiedlungskasten 2 für einen Mauersegler hat ein Kastenteil 3, das eine Innenhöhle 10 umgrenzt. Das Kastenteil 3 weist eine vordere Wand 4, eine Rückwand 5, eine linke Wand 6, eine rechte Wand 7, eine obere Wand 8 und eine untere Wand 9 auf. Die vordere Wand 4 ist von einem Flugloch 11 durchsetzt, das einen Zugang zur Innenhöhle 10 bildet.

Die linke Wand 6 ist parallel zur rechten Wand 7 und rechtwinklig zur unteren Wand 8 angeordnet. Die obere Wand 8 verläuft parallel zur unteren Wand 9. Die vordere Wand ist rechtwinklig zur unteren Wand 9 und parallel zur Rückwand 5 angeordnet. Das Kastenteil 3 hat also eine im Wesentlichen quaderförmige Außenkontur.

An der vorderen Wand 4 des Kastenteils 3 ist ein das Flugloch 11 ringförmig umgrenzender Vorsprung 12 vorgesehen, der über die daran angrenzende, der Innenhöhle 10 abgewandte Vorderseitenfläche 13 der vorderen Wand 4 vorsteht. Der Vorsprung 12 ist bevorzugt einstückig mit der vorderen Wand ausgestaltet.

Mit der vorderen Wand 4 des Kastenteils 3 ein Einputz-Gewebe 14 verbunden, welches die der Innenhöhle 10 abgewandte Vorderseitenfläche 13 des Kastenteils 3 bis auf einen das Flugloch 11 umgrenzenden Randbereich der vorderen Wand 4 überdeckt. In der Aufsicht auf die Vorderseitenfläche 13 steht das Einputz-Gewebe 14 nach links über die der Innenhöhle 10 abgewandte Außenfläche der linken Wand 6, nach rechts über die der Innenhöhle 10 abgewandte Außenfläche der rechten Wand 7, nach oben über die die der Innenhöhle 10 abgewandte Außenfläche der oberen Wand 8 und nach untern über die der Innenhöhle 10 abgewandte Außenfläche der unteren Wand 9 über. Das Überstandsmaß beträgt jeweils mindestens 10 cm und bevorzugt mindestens 15 cm.

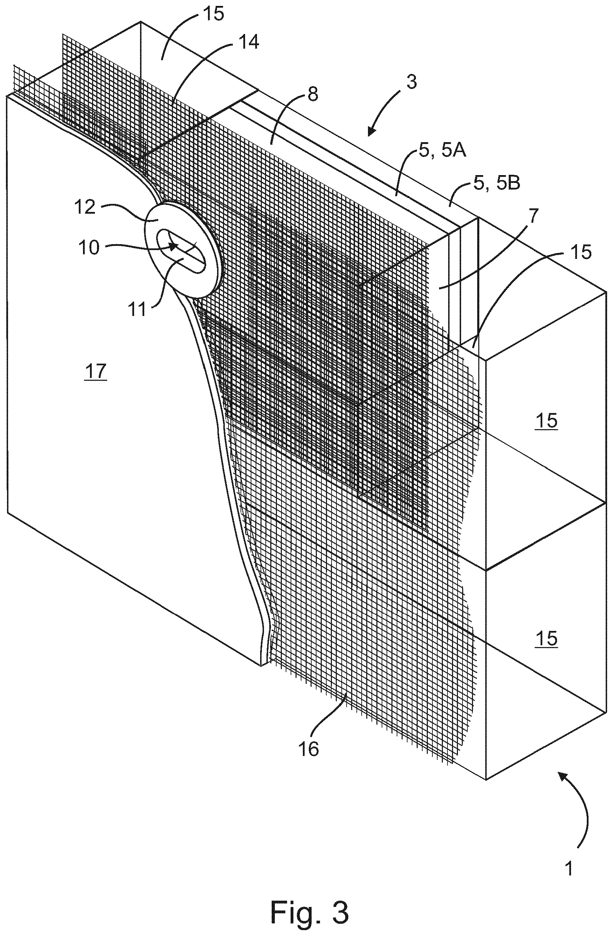

Wie in Fig. 3 zu sehen ist, wird der Nist- und/oder Ansiedlungskasten 2 so in die Wärmedämmverbundschicht 1 eingebaut, dass der den Vorsprung 12 umgrenzende Bereich der Vorderseitenfläche 13 der vorderen Wand 4 mit den dem Gebäude abgewandten Außenflächen der an das Kastenteil 3 seitlich und nach unten angrenzenden Wärmedämmelementen 15 bzw. Dämmplatten in einer Ebene liegt. Der Nist- und/oder Ansiedlungskasten 2 und die Wärmedämmelementen 15 werden bei der Montage mittels eines entsprechenden Mörtels miteinander und mit der Gebäudewand verklebt. Zusätzlich können die Wärmedämmelemente 15 mit Hilfe von WDVS-Dübeln an der Gebäudewand verankert werden. Die seitlich, nach oben und unten überstehenden Randbereiche des Einputz-Gewebes 14 überdecken die der Gebäudewand abgewandten Außenflächen der an das Kastenteil 3 angrenzenden Wärmedämmelemente 15. Auf die Wärmedämmelemente 15 wird mindestens ein weiteres Einputz-Gewebe 16 derart aufgebracht, dass es das Einputz-Gewebe 14 des Nist- und/oder Ansiedlungskastens bereichsweise überdeckt. Das mindestens eine weitere Einputz-Gewebe 16 kann beispielsweise mit Hilfe von Nadeln oder Nägeln an den an das Kastenteil 3 angrenzenden Wärmedämmelemente 15 fixiert werden.

Nachdem der Nist- und/oder Ansiedlungskasten 2 sowie die Wärmedämmelemente 15 wie vorstehend beschrieben an der Gebäudefassade montiert wurden, wird eine Putzschicht 17 auf die der Gebäudewand abgewandte Außenfläche der Wärmedämmelemente 15 und die Vorderseitenfläche 13 der vorderen Wand 4 aufgebracht, in welche die Einputz-Gewebe 14, 16 eingespachtelt werden. Die Putzschicht 17 erstreckt sich durchgehend von den Außenflächen der zu dem Kastenteil 3 benachbarten Wärmedämmelementen 15 über die vordere Wand 4 des Kastenteils 3 bis zu dem das Flugloch 11 umgrenzenden ringförmigen Vorsprung 12, so dass sich eine einheitliche Fassade ergibt.

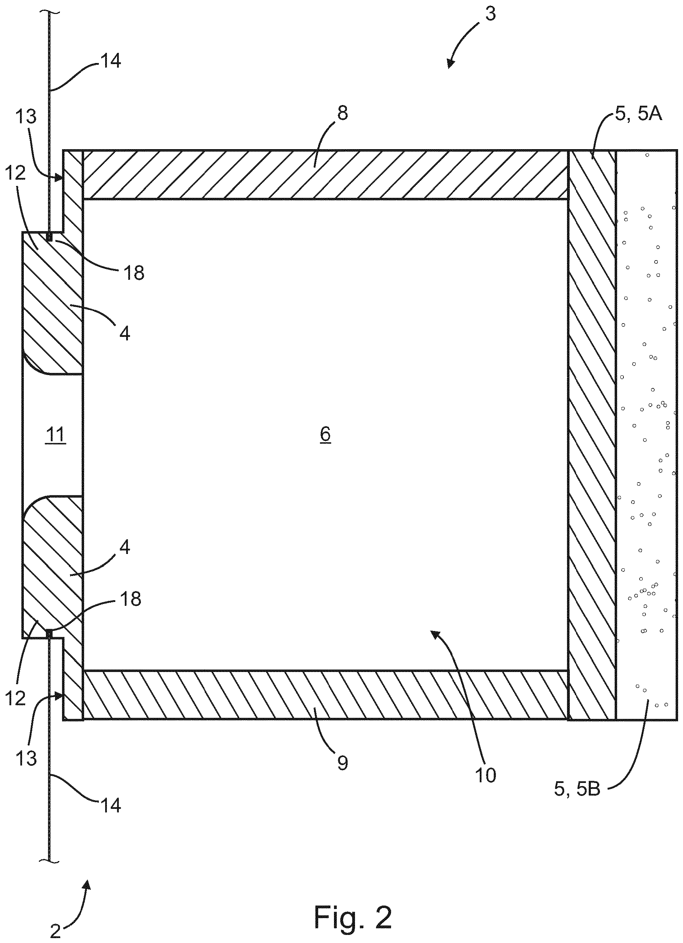

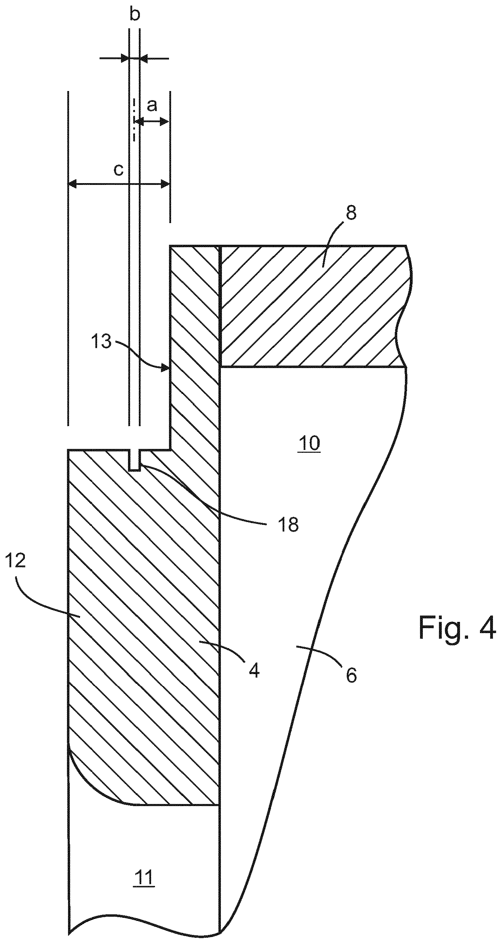

Wie in Fig. 4 erkennbar ist, weist der ringförmige Vorsprung 12 an seiner dem Flugloch 11 abgewandten Außenmantelfläche eine entlang einer Kreislinie um das Flugloch 11 umlaufende Ringnut 18 auf. In die Ringnut 18 greift das Einputz-Gewebe 14 mit einem Randbereich formschlüssig ein (Fig. 2). Das Einputz-Gewebe 14 hat zu diesem Zweck an der Stelle, an welcher der ringförmige Vorsprung 12 angeordnet ist, eine Lochung 19, deren lichte Querschnittsabmessungen kleiner sind als die entsprechenden Außenquerschnittsabmessungen des ringförmigen Vorsprungs 12. Das Einputz-Gewebe besteht aus einem elastischen Material, welches entgegen seiner Rückstellkraft derart aufweitbar ist, dass der die Lochung umgrenzende Rand des Einputz-Gewebes 14 auf die Ringnut 18 aufziehbar und von dieser abziehbar ist. Das Einputz-Gewebe 14 kann beispielsweise aus einem elastischen Kunststoff bestehen.

Die Breite b der Ringnut 18 entspricht der Dicke des Einputz-Gewebes 14 oder ist etwas größer als diese. Der Durchmesser der kreisrunden Lochung im EinputzGewebe 14 ist kleiner als der Außendurchmesser des ringförmigen Vorsprungs 12 und entspricht etwa dem Durchmesser des Nutgrunds der Ringnut 18. Das Überstandsmaß c des ringförmigen Vorsprungs 12 entspricht der Dicke der Putzschicht 17. Der Abstand a zwischen der Mittelebene der Ringnut 18 und der an den Vorsprung 12 angrenzenden Vorderseitenfläche 13 beträgt etwa ein Drittel des Überstandsmaßes c.

Die Rückwand 5 weist eine höhere Wärmedämmung auf als die vordere Wand 4. Wie in Fig. 2 zu sehen ist, wird dies einerseits dadurch erreich, dass die Rückwand 5 eine größere Materialstärke aufweist als die vordere Wand 4. Außerdem hat die Rückwand 5 eine Sandwichstruktur mit zwei Schichten. Eine erste Schicht 5A grenzt an die Innenhöhle 10 an und besteht aus dem gleichen Material wie die vordere Wand 4, die linke Wand 6, die rechte Wand 7, die untere Wand 8 und die obere Wand 9 des Kastenteils 3.

Eine zweite Schicht 5B ist zwischen der ersten Schicht 5A und der der vorderen Wand 4 des Kastenteils 3 abgewandten Rückseitenfläche des Kastenteils 3 angeordnet. Die zweite Schicht 5B besteht aus einem Material, das eine höhere Wärmedämmung aufweist als das Material der ersten Schicht 5A. Bei Bedarf kann die zweite Schicht 5B lösbar mit der ersten Schicht 5A verbunden sein, um die zweite Schicht 5B auf einfache Weise gegen ein entsprechendes Ersatzteil, das eine andere Wandstärke aufweist und/oder aus einem anderen Dämmmaterial besteht, auswechseln zu können.

Die Abmessung, die der den Vorsprung 12 umgrenzende Bereich des Kastenteils 3 normal zur Außenfläche der Gebäudewand hat, ist derart gewählt, dass sie der Dicke bzw. Wandstärke der an das Kastenteil 3 angrenzenden Wärmedämmelemente 15 entspricht.

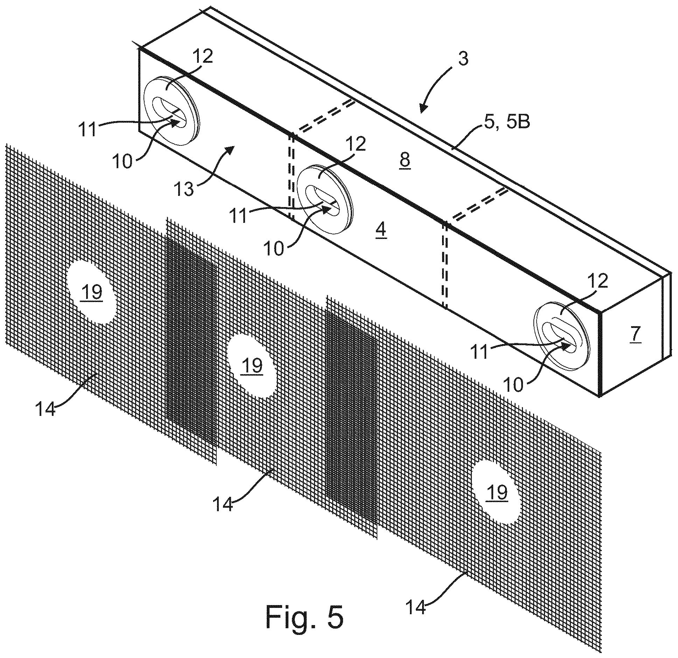

Bei dem in Fig. 5 gezeigten Ausführungsbeispiel weist der Nist- und/oder Ansiedlungskasten 2 mehrere in einer horizontalen Reihe nebeneinander angeordnete Innenhöhlen 10 auf. Jede dieser Innenhöhlen 10 ist jeweils durch ein ihr zugeordnetes Flugloch 11 zugänglich. Jedem Flugloch 11 ist jeweils ein Einputz-Gewebe 14 zugeordnet, welches formschlüssig in der Ringnut 18 des betreffenden Fluglochs 11 fixiert ist. Diese Einputz-Gewebe 14 können auch einstückig miteinander verbunden sein.

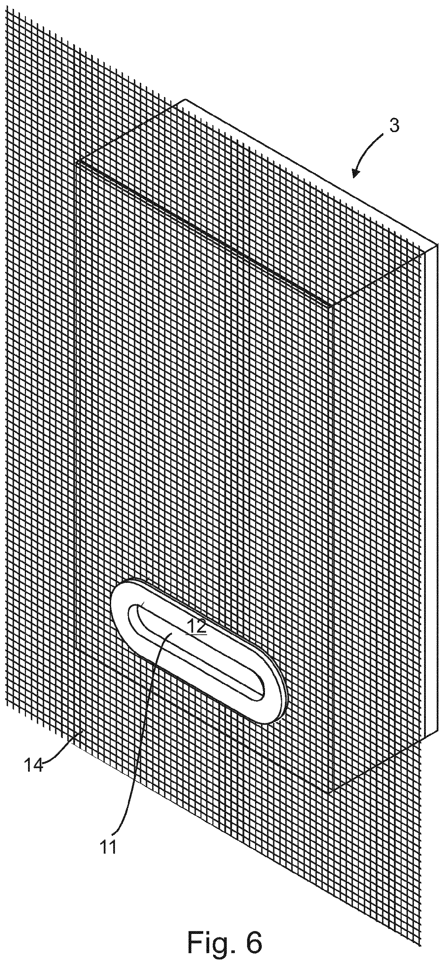

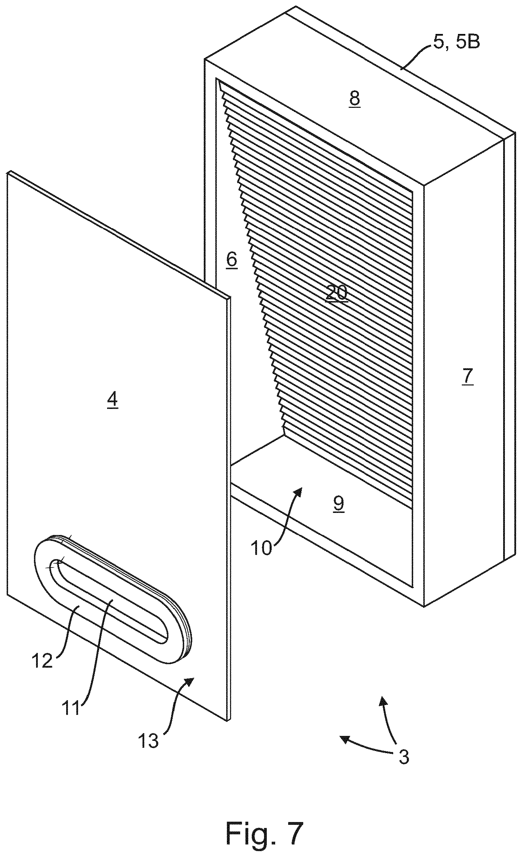

Der in Fig. 6 abgebildete Nist- und/oder Ansiedlungskasten 2 ist für Fledermäuse vorgesehen. Wie in Fig. 7 zu sehen ist, ist die Innenhöhle 10 des Nist- und/oder Ansiedlungskastens 2 von einer einen Überhang bildenden Schräge überdeckt, die eine Oberflächenstruktur 20 mit einer Vielzahl horizontal verlaufenden Profilierungsvorsprüngen aufweist, die übereinander angeordnet sind. An den Profilierungsvorsprüngen können sich Fledermäuse festhalten.

## Patentansprüche

1. Nist- und/oder Ansiedlungskasten (2) für Flugtiere, wie Mauersegler oder Fledermäuse, wobei der Nist- oder Ansiedlungskasten (2) in eine Wärmedämmverbundschicht (1) eines Gebäudes integrierbar ist und ein Kastenteil (3) mit Wänden (5, 6, 7, 8, 9) aufweist, die mindestens eine Innenhöhle (10) begrenzen, und wobei die vordere Wand (4) des Kastenteils (3) von wenigstens einem Flugloch (11) durchsetzt ist, das einen Zugang zur Innenhöhle (10) bildet, **dadurch gekennzeichnet, dass** mit der vorderen Wand (4) des Kastenteils (3) ein Einputz-Gewebe (14) verbunden ist, welches die der Innenhöhle (10) abgewandte Vorderseitenfläche (13) der vorderen Wand (4) zumindest bereichsweise überdeckt und zum Einputzen in eine Putzschicht (17) auf zu dem Kastenteil (3) benachbarten Wärmedämmelementen (15) der Wärmedämmverbundschicht (1) seitlich über den Außenrand der Vorderseitenfläche (13) der vorderen Wand (4) des Kastenteils (3) übersteht.

2. Nist- und/oder Ansiedlungskasten (2) nach Anspruch 1, **dadurch gekennzeichnet, dass** an der vorderen Wand (4) des Kastenteils (3) mindestens ein das wenigstens eine Flugloch (11) ringförmig umgrenzender Vorsprung (12) vorgesehen ist, der über die daran angrenzende, der Innenhöhle (10) abgewandte Vorderseitenfläche (13) der vorderen Wand (4) vorsteht, und dass das Einputz-Gewebe (14) den ringförmigen Vorsprung (12) umgrenzt.

3. Nist- und/oder Ansiedlungskasten (2) nach Anspruch 1 oder 2, **dadurch gekennzeichnet, dass** der ringförmige Vorsprung (12) an seinem dem Flugloch (11) abgewandten Außenrand eine umlaufende Ringnut (18) aufweist, und dass das Einputz-Gewebe (14) mit einem Randbereich formschlüssig in die Ringnut (18) eingreift.

4. Nist- und/oder Ansiedlungskasten (2) nach Anspruch 3, **dadurch gekennzeichnet, dass** das Einputz-Gewebe (14) an der Stelle, an welcher der ringförmige Vorsprung (12) angeordnet ist, eine vom Außenrand des Einputz-Gewebes (14) beabstandete Lochung (19) aufweist, deren lichte Querschnittsabmessungen kleiner sind als die entsprechenden Außenquerschnittsabmessungen des ringförmigen Vorsprungs (12) und dass das Einputz-Gewebe aus einem elastischen Material besteht.

5. Nist- und/oder Ansiedlungskasten (2) nach einem der Ansprüche 2 bis 4, **dadurch gekennzeichnet, dass** der ringförmige Vorsprung (12) einstückig mit der vorderen Wand (4) ausgestaltet ist.

6. Nist- und/oder Ansiedlungskasten (2) nach einem der Ansprüche 1 bis 5, **dadurch gekennzeichnet, dass** Einputz-Gewebe in der Aufsicht auf die Vorderseitenfläche (13) der vorderen Wand (4) allseitig über die Außenkontur des Kastenteils (3) übersteht.

7. Nist- und/oder Ansiedlungskasten (2) nach einem der Ansprüche 1 bis 6, **dadurch gekennzeichnet, dass** das Kastenteil (3) eine der vorderen Wand (4) gegenüberliegende Rückwand (5) aufweist, dass die Innenhöhle (10) zwischen der vorderen Wand (4) und der Rückwand (5) angeordnet ist, und dass die Rückwand (5) eine höhere Wärmedämmung auf als die vordere Wand (4).

8. Nist- und/oder Ansiedlungskasten (2) nach einem der Ansprüche 1 bis 7, **dadurch gekennzeichnet, dass** die Rückwand (5) eine größere Materialstärke aufweist als die vordere Wand (4).

9. Nist- und/oder Ansiedlungskasten (2) nach Anspruch 7 oder 8, **dadurch gekennzeichnet, dass** die Rückwand (5) mindestens zwei Schichten (5A, 5B) aufweist, dass eine erste Schicht (5A) an die Innenhöhle (10) angrenzt und eine zweite Schicht (5B) zwischen der ersten Schicht (5A) und der der vorderen Wand (4) des Kastenteils (3) abgewandten Rückseitenfläche des Kastenteils (3) angeordnet ist, und dass die zweite Schicht (5B) aus einem Material besteht, das eine höhere Wärmedämmung aufweist als das Material der ersten Schicht (5A).

10. Nist- und/oder Ansiedlungskasten (2) nach einem der Ansprüche 1 bis 9, **dadurch gekennzeichnet, dass** die Innenhöhle (10) von einer einen Überhang bildenden Schräge überdeckt ist, die eine Oberflächenstruktur (20) aufweist, die als Aufhängestelle für eine Fledermaus geeignet ist.

## Claims

1. Nesting and/or settlement box (2) for flying animals, such as swifts or bats, wherein the nesting or settlement box (2) can be integrated in a thermal insulation composite layer (1) of a building and has a box part (3) with walls (5, 6, 7, 8, 9), which delimit at least one interior cavity (10), and wherein the front wall (4) of the box part (3) contains at least one entrance hole (11), which forms an access to the interior cavity (10), **characterized in that** the front wall (4) of the box part (3) has connected to it a plaster-in fabric (14), which at least partially covers over the front-side surface (13) of the front wall (4), said front-side surface being directed away from the interior cavity (10), and, for the purpose of being plastered in to a plaster layer (17) on thermal-insulation elements (15) of the thermal insulation composite layer (1), said thermal-insulation elements being adjacent to the box part (3), projects laterally beyond the outer edge of the front-side surface (13) of the front wall (4) of the box part (3).

2. Nesting and/or settlement box (2) according to Claim 1, **characterized in that** the front wall (4) of the box part (3) has provided on it at least one protrusion (12), which surrounds the at least one entrance hole (11) in annular form and projects beyond the adjacent front-side surface (13) of the front wall (4), said front-side surface being directed away from the interior cavity (10), and **in that** the plaster-in fabric (14) surrounds the annular protrusion (12).

3. Nesting and/or settlement box (2) according to Claim 1 or 2, **characterized in that** the annular protrusion (12) has an encircling annular groove (18) on its outer edge directed away from the entrance hole (11), and **in that** the plaster-in fabric (14) has an edge region engaging in a formfitting manner in the annular groove (18).

4. Nesting and/or settlement box (2) according to Claim 3, **characterized in that**, at the location at which the annular protrusion (12) is arranged, the plaster-in fabric (14) has a perforation (19), which is at a distance from the outer edge of the plaster-in fabric (14) and of which the inside cross-sectional dimensions are smaller than the corresponding outer cross-sectional dimensions of the annular protrusion (12), and **in that** the plaster-in fabric consists of an elastic material.

5. Nesting and/or settlement box (2) according to one of Claims 2 to 4, **characterized in that** the annular protrusion (12) is formed in one piece with the front wall (4).

6. Nesting and/or settlement box (2) according to one of Claims 1 to 5, **characterized in that**, as seen in the plan view of the front-side surface (13) of the front wall (4), the plaster-in fabric projects beyond the outer contour of the box part (3) on all sides.

7. Nesting and/or settlement box (2) according to one of Claims 1 to 6, **characterized in that** the box part (3) has a rear wall (5), which is located opposite the front wall (4), **in that** the interior cavity (10) is arranged between the front wall (4) and the rear wall (5), and **in that** the rear wall (5) has a higher level of thermal insulation than the front wall (4).

8. Nesting and/or settlement box (2) according to one of Claims 1 to 7, **characterized in that** the rear wall (5) has a greater material thickness than the front wall (4).

9. Nesting and/or settlement box (2) according to Claim 7 or 8, **characterized in that** the rear wall (5) has at least two layers (5A, 5B), **in that** a first layer (5A) is adjacent to the interior cavity (10) and a second layer (5B) is arranged between the first layer (5A) and the rear-side surface of the box part (3), said rear-side surface being directed away from the front wall (4) of the box part (3), and **in that** the second layer (5B) consists of a material which has a higher level of thermal insulation than the material of the first layer (5A).

10. Nesting and/or settlement box (2) according to one of Claims 1 to 9, **characterized in that** the interior cavity (10) is covered over by a slope which forms an overhang and has a surface structure (20) which is suitable for a bat to hang on.

## Revendications

1. Boîte de nichage et/ou d'implantation (2) pour des animaux volants, tels que des martinets ou des chauves-souris, la boîte de nichage ou d'implantation (2) pouvant être intégrée dans une couche composite d'isolation thermique (1) d'un bâtiment et comprenant une partie de boîte (3) munie de parois (5, 6, 7, 8, 9), qui délimitent au moins une cavité intérieure (10), et la paroi avant (4) de la partie de boîte (3) étant traversée par au moins un orifice d'envol (11), qui forme un accès à la cavité intérieure (10), **caractérisée en ce qu'**un tissu de crépissage (14) est relié avec la paroi avant (4) de la partie de boîte (3), qui recouvre au moins en zones la surface latérale avant (13) de la paroi avant (4) détournée de la cavité intérieure (10) et, pour le crépissage dans une couche de crépis (17) sur des éléments d'isolation thermique (15) de la couche composite d'isolation thermique (1) voisins de la partie de boîte (3), dépasse latéralement au-dessus du bord extérieur de la surface latérale avant (13) de la paroi avant (4) de la partie de boîte (3) .

2. Boîte de nichage et/ou d'implantation (2) selon la revendication 1, **caractérisée en ce qu'**au moins une protubérance (12) circonscrivant annulairement l'au moins un orifice d'envol (11) est prévue sur la paroi avant (4) de la partie de boîte (3), qui fait saillie au-dessus de la surface latérale avant (13) adjacente à celle-ci, détournée de la cavité intérieure (10), de la paroi avant (4), et **en ce que** le tissu de crépissage (14) circonscrit la protubérance annulaire (12).

3. Boîte de nichage et/ou d'implantation (2) selon la revendication 1 ou 2, **caractérisée en ce que** la protubérance annulaire (12) comprend une rainure annulaire circonférentielle (18) sur son bord extérieur détourné de l'orifice d'envol (11), et **en ce que** le tissu de crépissage (14) s'engage par accouplement de forme dans la rainure annulaire (18) avec une zone de bord.

4. Boîte de nichage et/ou d'implantation (2) selon la revendication 3, **caractérisée en ce que** le tissu de crépissage (14) comprend, à l'emplacement auquel la protubérance annulaire (12) est agencée, une perforation (19) espacée du bord extérieur du tissu de crépissage (14), dont les dimensions de section transversale intérieures sont plus petites que les dimensions de section transversale extérieures correspondantes de la protubérance annulaire (12), et **en ce que** le tissu de crépissage est constitué d'un matériau élastique.

5. Boîte de nichage et/ou d'implantation (2) selon l'une quelconque des revendications 2 à 4, **caractérisée en ce que** la protubérance annulaire (12) est configurée d'un seul tenant avec la paroi avant (4).

6. Boîte de nichage et/ou d'implantation (2) selon l'une quelconque des revendications 1 à 5, **caractérisée en ce que**, dans la vue de dessus sur la surface latérale avant (13) de la paroi avant (4), le tissu de crépissage dépasse de tous les côtés au-dessus du contour extérieur de la partie de boîte (3).

7. Boîte de nichage et/ou d'implantation (2) selon l'une quelconque des revendications 1 à 6, **caractérisée en ce que** la partie de boîte (3) comprend une paroi arrière (5) opposée à la paroi avant (4), **en ce que** la cavité intérieure (10) est agencée entre la paroi avant (4) et la paroi arrière (5), et **en ce que** la paroi arrière (5) présente une isolation thermique plus élevée que la paroi avant (4).

8. Boîte de nichage et/ou d'implantation (2) selon l'une quelconque des revendications 1 à 7, **caractérisée en ce que** la paroi arrière (5) présente une épaisseur de matériau plus grande que la paroi avant (4).

9. Boîte de nichage et/ou d'implantation (2) selon la revendication 7 ou 8, **caractérisée en ce que** la paroi arrière (5) comprend au moins deux couches (5A, 5B), **en ce qu'**une première couche (5A) est adjacente à la cavité intérieure (10) et une deuxième couche (5B) est agencée entre la première couche (5A) et la surface latérale arrière de la partie de boîte détournée de la paroi avant (4) de la partie de boîte (3), et **en ce que** la deuxième couche (5B) est constituée d'un matériau qui présente une isolation thermique plus élevée que le matériau de la première couche (5A).

10. Boîte de nichage et/ou d'implantation (2) selon l'une quelconque des revendications 1 à 9, **caractérisée en ce que** la cavité intérieure (10) est recouverte par une pente formant un surplomb, qui présente une structure de surface (20) qui est appropriée en tant d'emplacement de suspension pour une chauve-souris.
